# EUROPÄISCHE PATENTANMELDUNG

(11) **EP 0 882 897 A1**
(43) Veröffentlichungstag der Anmeldung: **09.12.1998**
(21) Anmeldenummer: 98109887.4
(22) Anmeldetag: 29.05.1998
(51) Int. Cl.: F16B 25/00

(54) **Schraube**

(30) Priorität: 07.06.1997 DE 19724052
(71) Anmelder: Adolf Würth GmbH & Co. KG, 74653 Künzelsau (DE)
(72) Erfinder: Hohl, Wolfgang, 74653 Künzelsau-Amrichshausen (DE)
(74) Vertreter: Patentanwälte Ruff, Beier, Schöndorf und Mütschele

(57) **Zusammenfassung**

Eine Schraube enthält einen Schraubenkopf (3), einen Schraubenschaft (1) und eine Schraubenspitze (2). Den Schraubenschaft (1) entlang erstreckt sich ein Gewinde, das zwei Gewindeflanken (7,8) und eine Gewindekante (6) aufweist. Die Gewindekante (6) verläuft gegenüber einer gedachten Schraubenlinie abwechselnd nach rechts und links abweichend, wobei die Gewindekante (6) immer noch in der Fläche der Schraubenlinie liegt. Durch das Abweichen der Gewindeflanke (7,8) von der Schraubenlinie werden Vorsprünge gebildet, die ein verbessertes und erleichtertes Einschneiden des Gewindes in hartes Material ermöglichen.

## Beschreibung

Die Erfindung geht aus von einer Schraube, wie sie insbesondere zum Einschrauben in Steine, Beton oder andere harte Materialien verwendet wird.

Es ist bereits eine Schraube dieser Art bekannt, bei der die Gewindekante in regelmäßigen Abständen von halbkreisförmigen Ausnehmungen unterbrochen ist. Dadurch werden in Einschraubrichtung gesehen Kanten gebildet, die das Eindringen in die harte Bohrungswandung erleichtern.

Der Erfindung liegt die Aufgabe zugrunde, eine Schraube der eingangs genannten Art zu schaffen, die das Eindringen in hartes Material erleichtert und die sich einfach und kostengünstig herstellen läßt.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Durch das Abweichen der Gewindekante in Längsrichtung der Schraube gesehen von der gedachten Schraubenlinie werden ebenfalls Kanten gebildet, die das Einschneiden eines Gewindes in die Bohrungswand erleichtern. Gleichzeitig verlängert sich aber die Gewindekante im Vergleich zum Stand der Technik, so daß eine größere Kontaktfläche zwischen der Schraube und der Wand der Bohrung zur Verfügung steht.

In Weiterbildung der Erfindung kann vorgesehen sein, daß die Gewindekante beispielsweise zickzackartig verläuft. Die Gewindekante wird also von geradlinig verlaufenden Abschnitten gebildet, die gegenüber der gedachten Schraubenlinie nach beiden Seiten abwechselnd vorzugsweise unter dem gleichen Winkel schräg verlaufen.

Ebenfalls möglich ist es und wird von der Erfindung vorgeschlagen, daß die Gewindekante gerade Abschnitte aufweist, die parallel zueinander und zu der gedachten Schraubenlinie verlaufen. Diese geraden Abschnitte können beispielsweise von sehr kurzen schräg verlaufenden Abschnitten verbunden sein.

Die Flanken des Gewindes könnten glatt ausgebildet sein, also ohne Kanten.

Es ist aber ebenfalls möglich, daß die Flanken des Gewindes Ausnehmungen aufweisen, die in ihrer Form und Anordnung dem Verlauf der Gewindekante folgen. Insbesondere kann vorgesehen sein, daß die Ausnehmungen von scharfen Kanten begrenzt sind. Diese Kanten können daher ebenfalls beim Einarbeiten des Gewindes in die harte Bohrungswand mitwirken.

Die Erfindung schlägt vor, daß die Ausnehmungen nur in einem radial äußeren Teil der Flanken des Gewindes vorhanden sein können, der an der Gewindekante beginnt und beispielsweise über die halbe radiale Ausdehnung der Gewindeflanken verläuft.

Erfindungsgemäß kann vorgesehen sein, daß die Gewindekante zusammenhängend ausgebildet ist. In diesem Fall sind die von der Schraubenlinie abweichenden Teile der Gewindekante durch ebenfalls Teile der Gewindekante miteinander verbunden.

Es ist daber ebenfalls möglich, daß die Gewindekante unterbrochen ist. Diese Unterbrechungen können in Längsrichtung der Gewindekante sehr kurz ausgebildet sein, beispielsweise als einfache Einschnitte, die in radialer Richtung verlaufen. Dadurch verringert sich die Gesamtlänge der Gewindekante praktisch nicht.

Die Gewindekante kann linienförmig bzw. scharfkantig ausgebildet sein. Es ist aber ebenfalls möglich, daß die Gewindekante eine gewisse von null verschiedene Breite aufweist, also eher nach Art einer schmalen Zylinderfläche ausgebildet ist.

Beim Einarbeiten des Gewindes in die harte Bohrungswand, beispielsweise in Beton, wird die Gewindekante zu einem bestimmten Teil abgeschliffen bzw. beschädigt. Dies gilt für den der Schraubenspitze näheren Teil des Gewindes in verstärkten Maß, da der folgende Teil des Gewindes in eine schon vorgeformte Schraubennut eingreifen kann. Die Erfindung schlägt nun vor, daß sich die Abweichung der Gewindekante von der Schraubenlinie nur über ein Teil der Länge der Schraube bzw. des Gewindes erstrecken kann, der vorzugsweise von der Schraubenspitze ausgeht.

Eine weitere Möglichkeit, die von der Erfindung vorgeschlagen wird, kann darin bestehen, daß sich das Ausmaß der Abweichung der Gewindekante von der Schraubenlinie über die Länge der Schraube ändert, insbesondere von der Schraubenspitze ausgehend in Richtung auf den Schraubenkopf abnimmt. Die Abnahme dieser Abweichung kann insbesondere kontinuierlich und stetig erfolgen.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Fig. 1: eine Seitenansicht einer von der Erfindung vorgeschlagenen Schraube;
- Fig. 2: eine Abwicklung des Schraubengewindes der Schraube nach Fig. 1;
- Fig. 3: in vergrößertem Maßstab eine Teilansicht eines Schraubengewindes in Längsrichtung der Schraube;
- Fig. 4: einen Teilschnitt durch eine Schraube im Bereich ihres Gewindes;
- Fig. 5: eine Teilansicht einer Gewindeform;
- Fig. 6: eine Teilansicht einer geänderten Gewindeform;
- Fig. 7: eine nochmalige Teilansicht einer weiteren Gewindeform.

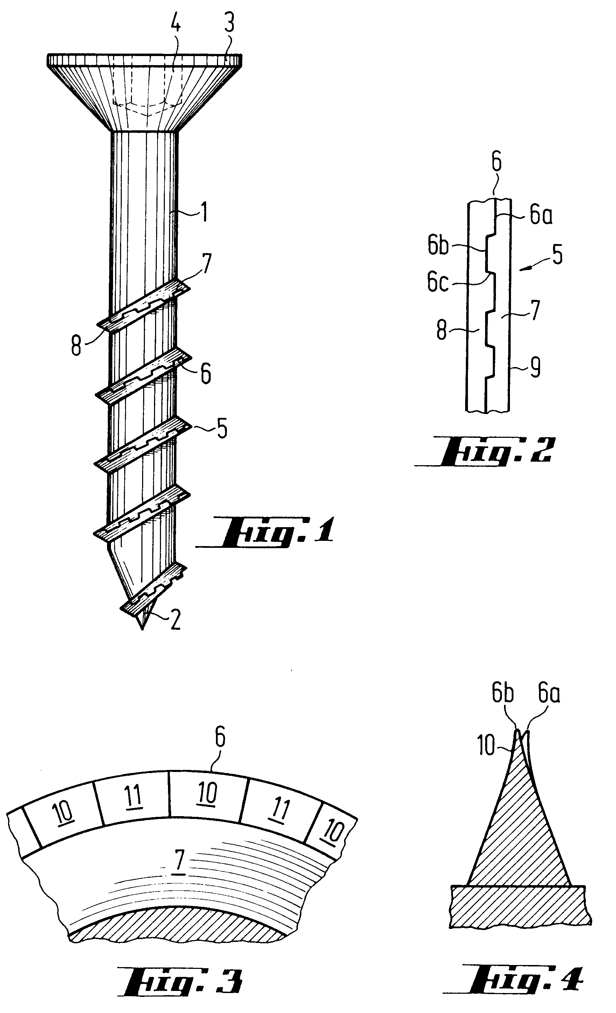

Fig. 1 zeigt eine von mehreren möglichen Schraubenformen. Es handelt sich um eine Senkkopfschraube mit einem zylindrischen Schraubenschaft 1, einer Schraubenspitze 2 und einem am gegenüberliegenden Ende des Schraubenschafts 1 angebrachten Schraubenkopf 3. Der Schraubenkopf 3 enthält eine Antriebsvertiefung 4, in die ein Schraubendreher eingesetzt werden kann. Über den vorderen Teil des Schraubenschafts 1 erstreckt sich ein Schraubengewinde 5, das eine Gewindekante 6 bildet. Die Gewindekante 6 verläuft etwa längs einer gedachten Schraubenlinie und endet im Bereich der Schraubenspitze 2. Die Gewindekante 6 wird von zwei Gewindeflanken 7, 8 begrenzt, die die Verbindung zwischen der Gewindekante 6 und dem Schraubenschaft 1 herstellen. Wie man der Fig. 1 entnehmen kann, verläuft die Gewindekante 6 nicht exakt längs einer Schraubenlinie, sondern in Abschnitten parallel zu der gedachten Schraubenlinie.

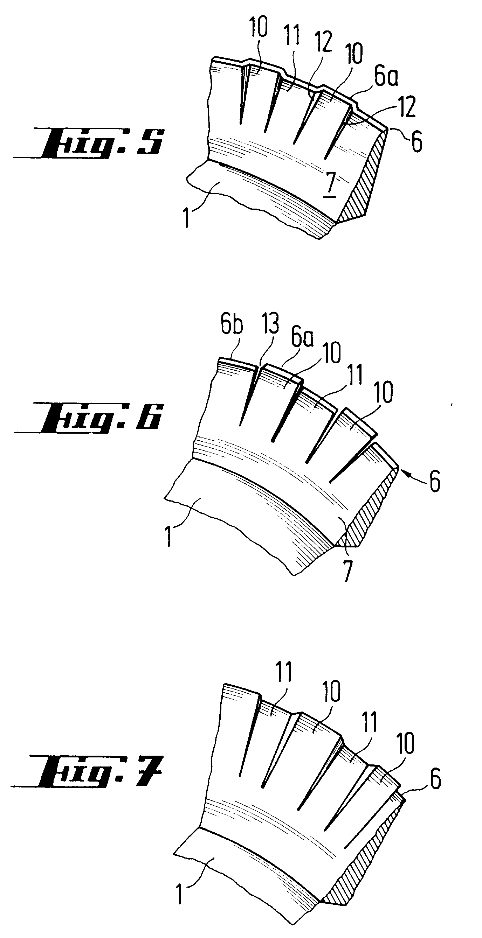

Dies ist deutlicher in Fig. 2 zu sehen. Fig. 2 zeigt die Abwicklung einer Windung des Schraubengewindes 5 der Schraube in Fig. 1. Die Gewindekante 6 wird von Abschnitten 6 a und 6 b gebildet, die parallel zueinander und zu der Mitte zwischen den Rändern 9 der Gewindeflanken 7, 8 verlaufen. Die abwechselnden Abschnitte 6 a und 6 b sind durch kurze Abschnitte 6 c miteinander verbunden, die fast senkrecht zu der Schraubenlinie verlaufen. Dadurch bildet sich eine Gewindekante 6, die in Längsrichtung der Schraube gesehen nach rechts und links abweicht, und zwar abwechselnd.

Fig. 3 zeigt in vergrößertem Maßstab eine Ansicht in Längsrichtung der Schraube auf einen Teil des Gewindes. Durch die Versetzung der Abschnitte 6 a und 6 b der Gewindekante 6 entstehen Ausnehmungen 10 und zwischen den Ausnehmungen 10 liegende Abschnitte 11, in denen die Gewindeflanken etwas steiler verlaufen als im übrigen Bereich. Aus der Fig. 3 kann man ebenfalls entnehmen, daß die Abweichung der Gewindekante 6 sich nur über einen bestimmten radialen Bereich der Gewindeflanken 7 erstreckt, der beispielsweise ein Drittel oder die Hälfte der radialen Abmessung des Gewindes entspricht.

Fig. 4 zeigt einen Längsschnitt durch einen Teil der Schraube, aus dem man entnehmen kann, daß die Gewindeabschnitte 6 b und 6 a in diesem Fall durch Einschnitte voneinander getrennt sind. Das Abweichen der beiden Gewindeabschnitte 6 a, 6 b von der gedachten Schraubenlinie in Richtung der Längsachse der Schraube, in Fig. 4 also rechts und links, ist hier ebenfalls zu sehen.

Fig. 5 zeigt eine perspektivische Ansicht eines Teiles eines Gewindegangs. Die von dem Schraubenschaft 1 ausgehende Gewindeflanke 7 enthält Ausnehmungen 10, die dem Verlauf der Gewindekante 6 folgen. Dort, wo die Gewindekante 6 einen in Richtung auf die Schraubenspitze 2 versetzten Abschnitt 6 a bildet, enthält die dem Schraubenkopf 3 zugewandte Flanke 7 des Gewindes eine Ausnehmung 10, die beidseits von einer scharfen Kante 12 begrenzt wird. Dabei ist für den Einschraubvorgang die in Fig. 5 linke Kante 12 von größerer Bedeutung, d. h. diejenige Kante, die beim Einschrauben die Vorderkante des auf die Ausnehmung 7 folgenden erhöhten Abschnitts 11 bildet. Bei der Ausführungsform der Fig. 5 ist ähnlich wie in Fig. 4 die Gewindekante 6 so gestaltet, daß sie eine gewisse von null verschiedene Breite aufweist. Bei der Ausführungsform nach Fig. 5 ist die Gewindekante 6 zusammenhängend ausgebildet, so daß die Ausnehmungen 7 seitlich geschlossen sind.

Fig. 6 zeigt eine der Fig. 5 entsprechende perspektivische Ansicht eines Teiles eines Schraubengewindes bei einer geänderten Ausführungsform. Wiederum verlaufen die Abschnitte 6 b und 6 a der Gewindekante 6 parallel zueinander und zu der Schraubenlinie und sind abwechselnd nach rechts und links versetzt. Wiederum werden Ausnehmungen 10 und zwischen den Ausnehmungen 10 liegende erhabene Abschnitte 11 gebildet. In diesem Falle sind die einzelnen Abschnitte 6 a und 6 b der Gewindekante 6 jedoch durch Einschnitte 13 voneinander getrennt, die in Richtung der Schraubenlinie sehr kurz sind, sich dagegen in radialer Richtung über etwa die Hälfte der Gewindehöhe erstrecken.

Fig. 7 zeigt eine der Fig. 5 entsprechende Darstellung eines Gewindes, bei dem die Gewindekante 6 zusammenhängend und scharfkantig ausgebildet ist.

Die Erfindung schlägt ebenfalls eine Kombination der Gewindeformen der Fig. 5, 6 und 7 vor. Beispielsweise kann das Abweichen der Gewindekante 6 von der gedachten Schraubenlinie auch so geschehen, daß die Gewindekante abwechselnd eine von null verschiedene Breite und eine scharfe Kante aufweist. Auch in diesem Fall würden Ausnehmungen 10 mit scharfen Kanten 12 gebildet, wobei auch die Übergänge zwischen den Abschnitten 6 a bzw. 6 b und dem scharfkantigen Bereich Kanten bilden, die das Einarbeiten des Gewindes in das harte Material ermöglichen.

Auch Kombinationen zwischen einer nicht unterbrochenen Gewindekante und einer Gewindekante mit radialen Einschnitten werden von der Erfindung vorgeschlagen.

## Patentansprüche

1. Schraube, mit
1.1 einem Schraubenkopf (3),
1.2 einem Schraubenschaft (1),
1.3 einer Schraubenspitze (2) sowie mit
1.4 einem Schraubengewinde (5), das
1.4.1 eine von zwei Flanken (7, 8) begrenzte Gewindekante (6) aufweist,
1.4.2 die von einer Schraubenlinie in Längsrichtung der Schraube abwechselnd nach beiden Seiten abweicht.

2. Schraube nach Anspruch 1, bei der die Gewindekante (6) zickzackartig verläuft.

3. Schraube nach Anspruch 1, bei der die Gewindekante (6) von geraden Abschnitten (6 a, 6 b) parallel zur Schraubenlinie gebildet wird.

4. Schraube nach einem der vorhergehenden Ansprüche, bei der die Flanken (7, 8) des Gewindes (5) glatt ausgebildet sind.

5. Schraube nach einem der vorhergehenden Ansprüche, bei der die Flanken (7, 8) des Gewindes (5) der Gewindekante (6) folgende Ausnehmungen (10) aufweisen.

6. Schraube nach Anspruch 5, bei der die Ausnehmungen (10) von scharfen Kanten (12) begrenzt sind.

7. Schraube nach Anspruch 5 oder 6, bei der die Ausnehmungen (10) nur in einem radial äußeren Teil der Gewindeflanken (7, 8) vorhanden sind.

8. Schraube nach einem der vorhergehenden Ansprüche, bei der die Gewindekante (6) zusammenhängend ausgebildet ist.

9. Schraube nach einem der Ansprüche 1 bis 7, bei der die Gewindekante (6) unterbrochen ist, insbesondere durch radiale Einschnitte (13).

10. Schraube nach einem der vorhergehenden Ansprüche, bei der die Gewindekante (6) linienförmig bzw. scharfkantig ausgebildet ist.

11. Schraube nach einem der vorhergehenden Ansprüche, bei der die Gewindekante (6) eine von null verschiedene Breite aufweist.

12. Schraube nach einem der vorhergehenden Ansprüche, bei der sich die Abweichung der Gewindekante (6) von der Schraubenlinie nur über einen Teil der Länge der Schraube bzw. des Gewindes (5) erstreckt, der vorzugsweise von der Schraubenspitze (2) ausgeht.

13. Schraube nach einem der vorhergehenden Ansprüche, bei der sich das Ausmaß der Abweichung der Gewindekante (6) von der Schraubenlinie über die Länge der Schraube ändert, insbesondere von der Schraubenspitze (2) in Richtung auf den Schraubenkopf (3) abnimmt, vorzugsweise stetig.
